(19) Europäisches Patentamt
European Patent Office
Office européen des brevets

(11) EP 3 048 539 A1

(12) EUROPEAN PATENT APPLICATION
published in accordance with Art. 153(4) EPC

(43) Date of publication:
27.07.2016 Bulletin 2016/30

(51) Int Cl.:
$G06F\ 17/30^{(2006.01)}$

(21) Application number: 14845311.1

(86) International application number:
PCT/CN2014/080660

(22) Date of filing: 24.06.2014

(87) International publication number:
WO 2015/039478 (26.03.2015 Gazette 2015/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.09.2013 CN 201310425581

(71) Applicant: ZTE Corporation
Shenzhen, Guangdong 518057 (CN)

(72) Inventors:
• YAN, Chunxia
Shenzhen
Guangdong 518057 (CN)

• DING, Yan
Shenzhen
Guangdong 518057 (CN)
• FENG, Jun
Shenzhen
Guangdong 518057 (CN)
• SHAN, Na
Shenzhen
Guangdong 518057 (CN)

(74) Representative: Mozzi, Matteo et al
Jacobacci & Partners S.p.A.
Via Senato, 8
20121 Milano (IT)

(54) METHOD AND APPARATUS FOR RECOGNIZING JUNK MESSAGES

(57) Provided are a method and device for recognizing spam short messages. In the method, a first feature word set is obtained in a spam short message sample set, and a first conditional probability of each feature word in the first feature word set is obtained; a second feature word set is obtained in a non-spam short message sample set and a second conditional probability of each feature word in the second feature word set is obtained; and a spam short message set is recognized from a short message set according to the number of words contained in each short message in the short message set to be processed, the number of repetition times of each short message in the short message set, the first feature word set, the second feature word set, the first conditional probability and the second conditional probability.

Obtaining, from a spam short message sample set, a first feature word set and a first conditional probability of each feature word in the first feature word set — S102

Obtaining, from a non-spam short message sample set, a second feature word set and a second conditional probability of each feature word in the second feature word set — S104

Recognizing a spam short message set from a short message set to be processed, according to the number of words contained in each short message in the short message set, the number of repetition times of each short message in the short message set, the first feature word set, the second feature word set, the first conditional probability and the second conditional probability — S106

Fig. 1

Printed by Jouve, 75001 PARIS (FR)

**Description**

**Technical Field**

The disclosure relates to the field of communications, particularly to a method and device for recognizing spam short messages.

**Background**

At present, mobile phone users receive different numbers of spam short messages almost everyday, and the users are often bothered by the spam short messages. Although operators are expanding investment of management funds and manpower every year, the return on the investment of measures adopted by the operators to monitor the spam short messages is decreasing year by year as means of circumvention and distributing channels applied by lawbreakers are becoming diversified. In addition, there are many other existing problems, especially in mining of the spam short messages. Among the problems, the most prominent problem is that the spam short messages cannot be mined accurately due to a large volume of data in the short messages.
Thus it can be seen, there still lacks a technical solution, which can mine the spam short messages accurately, in the related art.

**Summary**

A method and device for recognizing spam short messages are provided by embodiments of the disclosure, so as to at least solve the problem that spam short messages cannot be mined accurately due to a large volume of data in the short messages in the related art.
A method for recognizing spam short messages is provided according to an embodiment of the disclosure.
The spam short messages recognizing method according to the embodiment of the disclosure comprising: obtaining, from a spam short message sample set, a first feature word set and a first conditional probability of each feature word in the first feature word set; obtaining, from a non-spam short message sample set, a second feature word set and a second conditional probability of each feature word in the second feature word set; and recognizing a spam short message set from a short message set to be processed, according to the number of words contained in each short message in the short message set, the number of repetition times of each short message in the short message set, the first feature word set, the second feature word set, the first conditional probability and the second conditional probability.
Preferably, recognizing a spam short message set from a short message set to be processed comprises: calculating a typeweight of each short message according to the following formula:

$$\text{typeweight} = \frac{P(C0)\left(\prod\limits_{t=1}^{n} P(Wt \mid C0)\right)^{N}}{P(C1)\left(\prod\limits_{t=1}^{n} P(Wt \mid C1)\right)^{N}},$$ where P(C0) is a total amount of short message samples in the spam short message sample set, P(C1) is a total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set; and recognizing the spam short message set according to a comparison result of the typeweight and a preset threshold, wherein the typeweight of each spam short message in the spam short message set is larger than the preset threshold and the preset threshold is a ratio of P(C0) to P(C1).
Preferably, obtaining the first feature word set and the first conditional probability comprises: preprocessing the spam short message sample set; performing word segmentation on each short message sample in the spam short message sample set and obtaining content of each word contained in each short message sample and the number of appearance times of each word; statistically calculating the number of appearance times of each word in the spam short message sample set according to the number of appearance times of each word in each short message sample; calculating the first conditional probability according to a ratio of the number obtained through the statistical calculation to a total amount of short message samples in the spam short message sample set; and calculating a weight of each word in the spam short message sample set by using the number obtained through the statistical calculation and the first conditional probability, sorting all words by weights in a decreasing order, and selecting top N words to form the first feature word set, wherein N is a positive integer.
Preferably, obtaining the second feature word set and the second conditional probability comprises: preprocessing the non-spam short message sample set; performing word segmentation on each short message sample in the non-spam short message sample set and obtaining content of each word contained in each short message sample, and the number of appearance times of each word; statistically calculating the number of appearance times of each word in the non-spam short message sample set according to the number of appearance times of each word in each short message sample; calculating the second conditional probability according to a ratio of the number obtained through the statistical calculation to a total amount of short message samples in the non-spam short message sample set; and calculating a weight of each word in the non-spam short message sample set by using the number obtained through the statistical calculation and the second conditional probability, sorting all words by weights in a decreasing order, and selecting the top N words to form the second feature word set, wherein N is a positive integer.

Preferably, after recognizing the spam short message set from the short message set to be processed, the method further comprises: obtaining a calling number sending one or more spam short messages in the spam short message set and a called number receiving one or more spam short messages in the spam short message set; and monitoring the obtained calling number and called number.

Preferably, the method is applied to a Hadoop platform, and each short message in the short message set is processed in parallel on the Hadoop platform.

A device for recognizing spam short messages is provided according to another embodiment of the disclosure.

The spam short message recognizing device according to the embodiment of the disclosure comprising: a first obtaining module, configured to obtain a first feature word set in a spam short message sample set, and a first conditional probability of each feature word in the first feature word set; a second obtaining module, configured to obtain a second feature word set in a non-spam short message sample set and a second conditional probability of each feature word in the second feature word set; and a recognizing module, configured to recognize a spam short message set, which is to be processed, from a short message set according to the number of words contained in each short message in the short message set, the number of repetition times of each short message in the short message set, the first feature word set, the second feature word set, the first conditional probability and the second conditional probability.

Preferably, the recognizing module comprises: a first calculating unit, configured to calculate a typeweight of each short message according to the following formula: $\text{typeweight}=\dfrac{P(C0)(\prod_{t=1}^{n} P(Wt\mid C0))^{N}}{P(C1)(\prod_{t=1}^{n} P(Wt\mid C1))^{N}}$ , where P(C0) is a total amount of short message samples in the spam short message sample set, P(C1) is a total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set; and a recognizing unit, configured to recognize the spam short message set according to a comparison result of the typeweight and a preset threshold, wherein the typeweight of each spam short message in the spam short message set is larger than the preset threshold and the preset threshold is a ratio of P(C0) to P(C1).

Preferably, the first obtaining module comprises: a first preprocessing unit, configured to preprocess the spam short message sample set; a first word segmentation unit, configured to perform word segmentation on each short message sample in the spam short message sample set and obtain content of each word contained in each short message sample and the number of appearance times of each word; a first statistical unit, configured to statistically calculate the number of appearance times of each word in the spam short message sample set according to the number of appearance times of each word in each short message sample; a second calculating unit, configured to calculate the first conditional probability according to a ratio of the number obtained through the statistical calculation to a total amount of short message samples in the spam short message sample set; and a first selecting unit, configured to calculate a weight of each word in the spam short message sample set by using the number obtained through the statistical calculation and the first conditional probability, sort all words by weights in a decreasing order, and select top N words to form the first feature word set, wherein N is a positive integer.

Preferably, the second obtaining module comprises: a second preprocessing unit, configured to preprocess the non-spam short message sample set; a second word segmentation unit, configured to perform word segmentation on each short message sample in the non-spam short message sample set and obtain content of each word contained in each short message sample, and the number of appearance times of each word; a second statistical unit, configured to statistically calculate the number of appearance times of each word in the non-spam short message sample set according to the number of appearance times of each word in each short message sample; a third calculating unit, configured to calculate the second conditional probability according to a ratio of the number obtained through the statistical calculation to a total amount of short message samples in the non-spam short message sample set; and a second selecting unit, configured to calculate a weight of each word in the non-spam short message sample set by using the number obtained through the statistical calculation and the second conditional probability, sort all words by weights in a decreasing order, and select top N words to form the second feature word set, wherein N is a positive integer.

Preferably, the device further comprising: a third obtaining module, configured to obtain a calling number sending one or more spam short messages in the spam short message set and a called number receiving one or more spam short messages in the spam short message set; and a monitoring module, configured to monitor the obtained calling number and called number.

Preferably, the device is applied to a Hadoop platform, and each short message in the short message set is processed in parallel on the Hadoop platform.

By means of the embodiments of the disclosure, a first feature word set and a first conditional probability of each feature word in the first feature word set are obtained in a spam short message sample set; a second feature word set and a second conditional probability of each feature word in the second feature word set are obtained in a non-spam short message sample set; and a spam short message set is recognized from a short message set, which is to be processed, more accurately according to the number of words contained in each short message in the short message set, the number of repetition times of each short message in the short message set, the obtained first feature word set, second feature word set, first conditional probability and second conditional probability. By virtue of the above technical solution, the problem that spam short messages cannot be mined accurately due to a large volume of data in the short messages in the related art can be solved, the accuracy in recognizing the spam short messages when there is a massive amount of data in the short messages sent from data sources can be further improved, and the rate of false report and the rate of missing report for the spam short messages can be reduced.

## Brief Description of the Drawings

The accompanying drawings illustrated here are used for providing further understanding to the embodiments of the disclosure and constitute a part of the present application. The exemplary embodiments of the disclosure and description thereof are used for explaining the technical solutions provided by the embodiments of the disclosure, instead of consisting improper limitation thereto. In the accompanying drawings:

Fig. 1 is a flowchart of a method for recognizing spam short messages according to an embodiment of the disclosure;
Fig. 2 is a structural block diagram of a device for recognizing spam short messages according to an embodiment of the disclosure; and
Fig. 3 is a structural block diagram of a device for recognizing spam short messages according to a preferred embodiment of the disclosure.

## Detailed Description of the Embodiments

The disclosure will be expounded hereinafter with reference to the accompanying drawings and in combination with the embodiments. It needs to be noted that the embodiments in the present application and the characteristics in the embodiments may be combined with each other if there is no conflict.

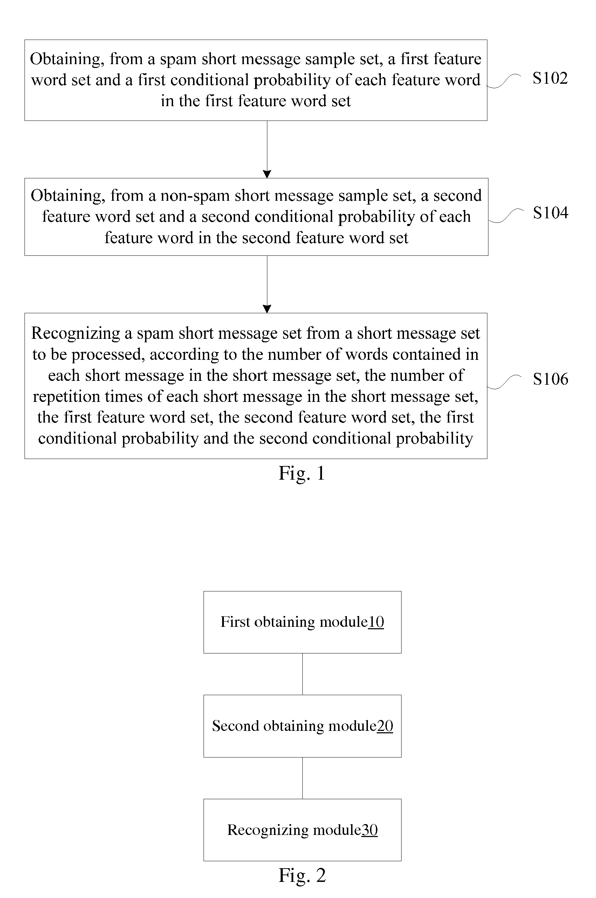

Fig. 1 is a flowchart of a method for recognizing spam short messages according to an embodiment of the disclosure. As shown in Fig. 1, the method may include the following processing steps.

Step S102: Obtaining, from a spam short message sample set, a first feature word set and a first conditional probability of each feature word in the first feature word set.

Step S104: Obtaining, from a non-spam short message sample set, a second feature word set and a second conditional probability of each feature word in the second feature word set.

Step S106: Recognizing a spam short message set from a short message set to be processed, according to the number of words contained in each short message in the short message set, the number of repetition times of each short message in the short message set, the first feature word set, the second feature word set, the first conditional probability and the second conditional probability.

In the related art, spam short messages cannot be mined accurately due to a large amount of data in the short messages. By applying the method as shown in Fig. 1, a first feature word set and a first conditional probability of each feature word in the first feature word set are obtained in a spam short message sample set; a second feature word set and a second conditional probability of each feature word in the second feature word set are obtained in a non-spam short message sample set; and a spam short message set may be recognized from a short message set, which is to be processed, more accurately according to the number of words contained in each short message in the short message set, the number of repetition times of each short message in the short message set, the obtained first feature word set, second feature word set, first conditional probability and second conditional probability, thereby, the problem that spam short messages cannot be mined accurately due to a large volume of data in the short messages in the related art can be solved, the accuracy in recognizing the spam short messages when there is a massive amount of data in the short messages sent from data sources can be further improved, and the rate of false report and the rate of missing report for the spam short messages can be reduced.

In a preferred implementation process, the method is applied to a Hadoop platform, and each short message in the short message set is processed in parallel on the Hadoop platform.

Preferably, that the spam short message set is recognized from the short message set in Step S106 may include the following operations.

Step 1: Calculating a typeweight (called as classification weight) of each short message according to the following formula:

$$\text{typeweight=} \frac{P(C0)(\prod_{t=1}^{n} P(Wt|\ C0))^{N}}{P(C1)(\prod_{t=1}^{n} P(Wt|\ C1))^{N}},$$

where P(C0) is the total amount of short message samples in the spam short message sample set, P(C1) is the total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set.

Step 2: The spam short message set is recognized according to a comparison result of the typeweight and a preset threshold, wherein the typeweight of each spam short message in the spam short message set is larger than the preset threshold and the preset threshold is the ratio of P(C0) to P(C1).

In a preferred embodiment, after the short message set is received from data sources, firstly, the short messages are merged, short messages of the same message content are gathered, and the content of the short messages and the numbers of appearance times of the short messages are outputed; secondary, typeweights of the short messages are calculated and the short messages are classified; then, the content of each short message in the short message set is preprocessed as follows.

(1) Noise processing is performed, special characters including spaces, punctuation marks and so on are deleted and only Chinese characters and numbers are kept.
(2) Stop words are removed through filtering, such as modal particles (such as ah, nah), conjunctions (such as and, or) and auxiliary words (such as "的", "地").
(3) IK word segmentation is performed, and the content of the short message is stored in a Dx vector.

A typeweight is calculated, typeWeight=P(C0|Dx)/P(C1|Dx),

$$\frac{P(C0 \mid Dx)}{P(C1 \mid Dx)} = \frac{P(C0)(\prod_{t=1}^{n} P(Wt \mid C0))^{N}}{P(C1)(\prod_{t=1}^{n} P(Wt \mid C1))^{N}},$$

where P(C0) is the total amount of short message samples in the spam short message sample set, P(C1) is the total amount of short message samples in the non-spam short message sample set, P(Wt | C0) is the first conditional probability, P(Wt | C1) is the second conditional probability, n is the number of different words in the Dx vector, N is the number of repetition times of each short message in the short message set, and Wt belongs to the first feature word set or the second feature word set.

It needs to be noted that calculation may be performed according to the following rules if a new word Wt obtained after the word segmentation is performed on the content of the short message does not belong to the first feature word set and/or the second feature word set.

(1) When the feature word Wt only appears in the normal short message sample set, P(WT|C0) may be calculated according to a Laplace coefficient or decreased by two orders of magnitude based on P(Wt|C1).
(2) When the feature word Wt only appears in the spam short message sample set, P(Wt|C1) may be calculated according to a Laplace coefficient or selects the lowest word frequency probability in the normal short message sample set.

Besides, a threshold is set according to a practical effect. If the typeweight is larger than the threshold, it is believed that the short message is a spam short message and outputted as a result. The threshold is adjusted in real time according to the practical effect.

Preferably, obtaining the first feature word set and the first conditional probability in Step S102 may include the following steps.

Step S3: Preprocessing the spam short message sample set.

Step S4: Performing word segmentation on each short message sample in the spam short message sample set, and obtaining the content of each word contained in each short message sample and the number of appearance times of each word.

Step S5: Calculating the number of appearance times of each word in the spam short message sample set statistically according to the number of appearance times of each word in each short message sample.

Step S6: Calculating the first conditional probability according to the ratio of the number obtained through the statistical calculation to the total amount of short message samples in the spam short message sample set.

Step S7: Calculating a weight of each word in the spam short message sample set by using the number obtained through the statistical calculation and the first conditional probability, sorting all words by weights in a decreasing order, and selecting top N words to form the first feature word set, wherein N is a positive integer.

In a preferred embodiment, obtaining a set of words of the spam short message sample set and the number of appearance times of each word in the spam short message sample set may include the following processing content.

(1) Preprocessing the spam short message sample set.

(1-1) A message having extremely short content is removed. For example, a message having short message content of less than 10 characters is removed.

(1-2) Noise processing is performed, special characters including spaces and punctuation marks and so on are deleted and only Chinese characters and numbers are kept.

(1-3) Stop words are removed through filtering.

(2) IK word segmentation is performed on spam short messages, words contained in each spam short message and the number of the words are outputted.

(3) The number of appearance times of each word in the spam short message sample set is calculated statistically, and each word and the number of appearance times of the word in the spam short message sample set are outputted.

Finally, a weight of the word in the spam short message sample set is calculated according to a conditional probability formula $P(Wt|C0)$=the ratio of the number of appearance times of the word $Wt$ in the spam short message sample set to the total number $C0$ of spam short message samples in the spam short message sample set, sorting is performed according to weights, and the top N words are outputted as feature words, wherein a specific value of N is determined according to a practical condition.

Preferably, obtaining the second feature word set and the second conditional probability in Step S104 may the following operations.

Step S8: Preprocessing the non-spam short message sample set.

Step S9: Performing Word segmentation on each short message sample in the non-spam short message sample set and the content of each word contained in each short message sample, and obtaining the number of appearance times of each word.

Step S10: The number of appearance times of each word in the non-spam short message sample set is calculated statistically according to the number of appearance times of each word in each short message sample.

Step S11: Calculating the second conditional probability according to the ratio of the number obtained through the statistical calculation to the total amount of short message samples in the non-spam short message sample set.

Step S12: Calculating a weight of each word in the non-spam short message sample set by using the number obtained through the statistical calculation and the second conditional probability, sorting all words by weights in a decreasing order, and selecting top N words to form the second feature word set, wherein N is a positive integer.

In a preferred embodiment, obtaining a set of words of the normal (i.e. non-spam) short message sample set and the number of appearance times of each word in the normal short message sample set may include the following processing content.

(1) The normal short message sample set is preprocessed, including several items as follows.

(1-1) A message having extremely short content is removed. For example, a message having short message content of less than 10 characters is removed.

(1-2) Noise processing is performed, special characters including spaces and punctuation marks and so on are deleted and only Chinese characters and numbers are kept.

(1-3) Stop words are removed through filtering.

(2) IK word segmentation is performed on normal short messages, words contained in each normal short message and the number of the words are outputted.

(3) The number of appearance times of each word in the normal short message sample set is calculated statistically, and each word and the number of appearance times of the word in the normal short message sample set are outputted.

Finally, calculating a weight of the word in the normal short message sample set according to a conditional probability formula $P(Wt|C1)=$the ratio of the number of appearance times of the word Wt in the normal short message sample set to the total number C1 of normal short messages in the normal short message sample set, sorting is performed according to weights, and outputting top N words as feature words, where a specific value of N is determined according to a practical condition.

In a preferred implementation process, Step S102 and Step S104 may be performed in parallel.

Preferably, after Step S106 that the spam short message set is recognized from the short message set, the method may further include the following step.

Step S13: A calling number sending one or more spam short messages in the spam short message set and a called number receiving one or more spam short messages in the spam short message set are obtained.

Step S14: The obtained calling number and called number are monitored.

In a preferred embodiment, a short message to be processed may be also mined secondarily according to a spam short message result outputted above so as to obtain the numbers of all mobile phones that have sent and/or received the content of the spam short messages, and the content of all short messages sent and/or received by the number of each mobile phone.

As a preferred implementation mode of the disclosure, all operations as follows are performed on a Hadoop platform and the functions above are implemented by a series of Hadoop operations which may be further divided into a map process and a reduce process. Processing may be performed by a default map process and a default reduce process if a map process and a reduce process are not configured.

Operation 1: The spam short message sample set is preprocessed, and the set of words in the spam short message sample set and the number of appearance times of each word in the spam short message sample set are obtained.

Map input: Spam short message sample set

The content of each inputted short message is as shown in Table 1.

Table 1

| Scts | Message origination submission time (YYYY-MM-DD HH:MM:SS) |
|---|---|
| OrigAddr | Calling number |
| DestAddr | Called number |
| UserData | Short message content |
| UDLen | Short message length |
| CdrType | Telephone bill type |

Map processing is performed on the content of the inputted short message.

The UserData field is processed as follows.

(1) A message having extremely short content is removed. For example, a message having short message content of less than 10 characters is removed.

(2) Noise processing is performed, special characters including spaces and punctuation marks and so on are deleted and only Chinese characters and numbers are kept.

(3) Stop words are removed through filtering.

(4) IK word segmentation is performed on a spam short message, each word is used as a key and a value thereof is 1.

The content of the inputted short message is outputted by the map process, as shown in Table 2.

Table 2

| Key | Value |
|-----|-------|
| Word | 1 |

A map output result is inputted in the reduce process by default Hadoop intermediate processing, specifically as follows.

Table 3 shows the map output result inputted in the reduced process.

Table 3

| Key | Value |
|-----|-------|
| Word | List(1,1...) |

A process of reduce processing is as follows.

Data in the list is traversed and added according to different words so as to obtain the number n of appearance times of the word and "spam_" is used as a prefix to form a character string of values with n.

A reduce output result is as shown in Table 4.

Table 4

| Key | Value |
|-----|-------|
| Word | spam_n |

Operation 2: The normal short message sample set is preprocessed, the set of words in the normal short message sample set and the number of appearance times of each word in the normal short message sample set are obtained.

Map input: Normal short message sample set

The content of each inputted short message is as shown in Table 5.

Table 5

| Scts | Message origination submission time (YYYY-MM-DD HH:MM:SS) |
|------|-----------------------------------------------------------|
| OrigAddr | Calling number |
| DestAddr | Called number |
| UserData | Short message content |
| UDLen | Short message length |
| CdrType | Telephone bill type |

Map processing is performed on the content of the inputted short message (the Userdata field).

(1) A message having extremely short content is removed. For example, a message having short message content of less than 10 characters is removed.
(2) Noise processing is performed, special characters including spaces and punctuation marks and so on are deleted and only Chinese characters and numbers are kept.
(3) Stop words are removed through filtering.
(4) IK word segmentation is performed on a normal short message, each word is used as a key and a value thereof is 1.

The content of the inputted short message is outputted by the map process, as shown in Table 6.

Table 6

| Key | Value |
|-----|-------|
| Word | 1 |

A map output result is inputted in the reduce process by default Hadoop intermediate processing, specifically as follows.

Table 7 shows the map output result inputted in the reduced process.

Table 7

| Key | Value |
| --- | --- |
| Word | List(1,1...) |

A process of reduce processing is as follows.

Data in the list is traversed and added according to different words so as to obtain the number n of appearance times of the word and "normal_" is used as a prefix to form a character string of values with n.

A reduce output result is as shown in Table 8.

Table 8

| Key | Value |
| --- | --- |
| Word | normal_n |

It needs to the noted that the first operation and the second operation may be absolutely performed synchronously.

Operation 3: Acquisition of a weight of a word of the spam short message sample set

Map input: A word of the spam short message sample set, as shown in Table 9

Table 9

| Key | Value |
| --- | --- |
| Word | spam_n |

A map operation process is as follows.

A weight of the word in the spam short message sample set is calculated according to a conditional probability formula $P(W_t|C_0)$=the ratio of the number of appearance times of the word $W_t$ in the spam short message sample set to the total number $C_0$ of spam short message samples in the spam short message sample set, sorting is performed according to weights, and the top N words are outputted as feature words, where a specific value of N is determined according to a practical condition.

A map output result is as shown in Table 10.

Table 10

| Key | Value |
| --- | --- |
| Word | $P(W_t|C_0)$,spam_n |

Operation 4: Acquisition of a word of the normal short message sample set

Map input: A word of the normal short message sample set, as shown in Table 11.

Table 11

| Key | Value |
| --- | --- |
| Word | normal_n |

A map operation process is as follows.

A weight of the word in the normal short message sample set is calculated according to a conditional probability formula $P(W_t|C_1)$=the ratio of the number of appearance times of the word $W_t$ in the normal short message sample set to the total number $C_1$ of normal short messages in the normal short message sample set, sorting is performed according to weights, and the top N words are outputted as feature words, where a specific value of N is determined according to a practical condition.

A map output result is as shown in Table 12.

Table 12

| Key | Value |
|------|-------|
| Word | P(Wt|C1),normal_n |

It needs to be noted that the output results of the third operation and the fourth operation will be stored in two different caches respectively for future use, and the third operation and the fourth operation may be also performed synchronously.

Operation 5: Merging and processing of to-be-processed short messages Map input: To-be-processed short messages

The content of each inputted short message is as shown in Table 13.

Table 13

| Scts | Message origination submission time (YYYY-MM-DD HH:MM:SS) |
|----------|-------------------------------------------------------|
| OrigAddr | Calling number |
| DestAddr | Called number |
| UserData | Short message content |
| UDLen | Short message length |
| CdrType | Telephone bill type |

A map operation process is as follows.

The content of the short message of the data source UserData- is set as a key and a value thereof is set as 1.

A map output result is as shown in Table 14.

Table 14

| Key | Value |
|----------------------|-------|
| Short message content | 1 |

Reduce input is as shown in Table 15.

Table 15

| Key | Value |
|----------------------|-------------|
| Short message content | List(1,1...) |

A reduce operation process is as follows.

Data in the list is traversed and added according to different keys so as to obtain the number of appearance times of the message in a new set of to-be-classified messages, and the number of the appearance times is combined with the content of the message to be used as a value.

A reduce output result is as shown in Table 16.

| Key | Value |
|----------------------|--------------------------|
| Short message content | N_short message content |

Operation 6: Calculation of a typeweight of a short message and classification of the short message

Map input: A list of texts of merged short messages, as shown in Table 17.

Table 17

| Key | Value |
|---|---|
| Short message content | N_short message content |

A map operation process:

IK word segmentation is performed on the content of a short message of the data source above, and the content of the short message is stored in a Dx vector. For example:

Dx={contact, receipt, telephone, 138999990111, ......}

a typeWeight=P(C0|Dx)/P(C1|Dx) is calculated, where n is the number of different words in the Dx vector, N is the number of repetition times of the short message, and P(WT|C0) and P(Wt|C1) are results obtained based on calculation of the sample libraries above. Calculation may be performed according to the following rules if a new word Wt obtained after the word segmentation is performed on the content of the short message is not in the feature word sets obtained in Step 1.

$$\frac{P(C0 \mid Dx)}{P(C1 \mid Dx)} = \frac{P(C0)\left(\prod_{t=1}^{n} P(Wt \mid C0)\right)^{N}}{P(C1)\left(\prod_{t=1}^{n} P(Wt \mid C1)\right)^{N}}$$

(1) When the feature word only appears in the normal short message sample set, P(WT|C0) may be calculated according to a Laplace coefficient or decreased by two orders of magnitude based on P(Wt|C1).
(2) When the feature word only appears in the spam short message sample set, P(Wt|C1) may be calculated according to a Laplace coefficient or selects the lowest word frequency probability in the normal short message sample set.

A map output result is as shown in Table 18.

Table 18

| Key | Value |
|---|---|
| Short message content | typeWeight |

The content of the short message and the typeweight are outputted to a file, and a record larger than K is classified as a spam short message according to a sorting result of typeweights, wherein K=P(C0)/P(C1). Specifically, a value of K may be adjusted in real time according to a practical effect while an output result may be used as Cache input of the next step, and named as job6_ResultCache.
Operation 7: Further mining of a classification result
Map input: To-be-processed short messages
The content of each inputted short message is as shown in Table 19.

Table 19

| Scts | Message origination submission time (YYYY-MM-DD HH:MM:SS) |
|---|---|
| OrigAddr | Calling number |
| DestAddr | Called number |
| UserData | Short message content |
| UDLen | Short message length |
| CdrType | Telephone bill type |

A map operation process is as follows.

The content of a short message of the data source UserData- above is used as a key, and an output result is read from job6_ResultCache. If the output result is not null, the content of the short message may be used as the key, and the called number_called number is outputted as a value. Otherwise, no result is outputted.

A map output result is as shown in Table 20.

Table 20

| Key | Value |
|---|---|
| Short message content | Calling number_called number |

A reduce input is as shown in Table 21.

Table 21.

| Key | Value |
|---|---|
| Short message content | List(Calling number 1_called number 1, calling number 1_ called number 2, calling number 2_ called number 1...) |

A reduce operation process is as follows.

Data in the list is traversed according to different keys, elements are connected by "; ", and the content of the short message is used as a key.

A reduce output result is as shown in Table 22.

Table 22

| Key | Value |
|---|---|
| Short message content | Calling number 1_called number 1, calling number 1_ called number 2, calling number 2_ called number 1... |

Fig. 2 is a structural block diagram of a device for recognizing spam short messages according to an embodiment of the disclosure. As shown in Fig. 2, the device for recognizing spam short messages may include: a first obtaining module 10, configured to obtain a first feature word set in a spam short message sample set, and a first conditional probability of each feature word in the first feature word set; a second obtaining module 20, configured to obtain a second feature word set in a non-spam short message sample set and a second conditional probability of each feature word in the second feature word set; and a recognizing module 30, configured to recognize a spam short message set from a short message set to be processed, according to the number of words contained in each short message in the short message set, the number of repetition times of each short message in the short message set, the first feature word set, the second feature word set, the first conditional probability and the second conditional probability.

The device as shown in Fig. 2 solves the problem that spam short messages cannot be mined accurately due to a large volume of data in the short messages in the related art, thus the accuracy in recognizing the spam short messages when there is a massive amount of data in the short messages sent from data sources can be improved, the rate of false report and the rate of missing report for the spam short messages can be reduced.

In a preferred implementation process, the device is applied to a Hadoop platform, and each short message in the short message set is processed in parallel on the Hadoop platform.

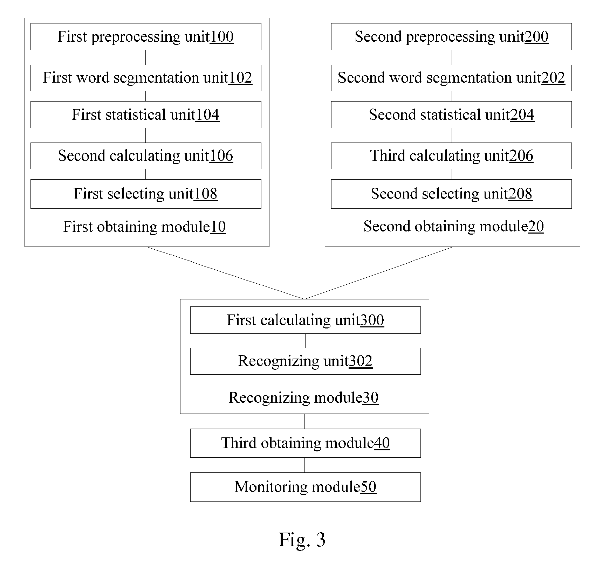

Preferably, as shown in Fig. 3, the recognizing module 30 may include: a first calculating unit 300, configured to calculate a typeweight of each short message according to the following formula: 地 where P(C0) is the total amount of short message samples in the spam short message sample set, P(C1) is the total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set; and a recognizing unit 302, configured to recognize the spam short message set according to a comparison result of the typeweight and a preset threshold, wherein the typeweight of each spam short message in the spam short message set is larger than the preset threshold and the preset threshold is the ratio of P(C0) to P(C1).

Preferably, as shown in Fig. 3, the first obtaining module 10 may include: a first preprocessing unit 100, configured to preprocess the spam short message sample set; a first word segmentation unit 102, configured to perform word segmentation on each short message sample in the spam short message sample set and obtain the content of each word contained in each short message sample and the number of appearance times of each word; a first statistical unit 104, configured to statistically calculate the number of appearance times of each word in the spam short message sample set according to the number of appearance times of each word in each short message sample; a second calculating unit 106, configured to calculate the first conditional probability according to the ratio of the number obtained through the statistical calculation to the total amount of short message samples in the spam short message sample set; and a first selecting unit 108, configured to calculate a weight of each word in the spam short message sample set by using the number obtained through the statistical calculation and the first conditional probability, sort all words by weights in a decreasing order, and select top N words to form the first feature word set, wherein N is a positive integer.

Preferably, as shown in Fig. 3, the second obtaining module 20 may include: a second preprocessing unit 200, configured to preprocess the non-spam short message sample set; a second word segmentation unit 202, configured to perform word segmentation on each short message sample in the non-spam short message sample set and obtain the content of each word contained in each short message sample, and the number of appearance times of each word; a second statistical unit 204, configured to statistically calculate the number of appearance times of each word in the non-spam short message sample set according to the number of appearance times of each word in each short message sample; a third calculating unit 206, configured to calculate the second conditional probability according to the ratio of the number obtained through the statistical calculation to the total amount of short message samples in the non-spam short message sample set; and a second selecting unit 208, configured to calculate a weight of each word in the non-spam short message sample set by using the number obtained through the statistical calculation and the second conditional probability, sort all words by weights in a decreasing order, and select top N words to form the second feature word set, wherein N is a positive integer.

Preferably, as shown in Fig. 3, the device may further include: a third obtaining module 40, configured to obtain a calling number sending one or more spam short messages in the spam short message set and a called number receiving one or more spam short messages in the spam short message set; and a monitoring module 50, configured to monitor the obtained calling number and called number.

It can be seen from the description above that the embodiments have implemented the following technical effects (it needs to be noted that these effects can be implemented by some preferred embodiments): the technical solution provided by the embodiments of the disclosure can analyze a spam short message from the content of the short message based on a big data platform and intelligent IK word segmentation, which can include analysis of sending frequency information of the spam short message, and monitoring interference caused by a change of a calling number or a called number can be avoided at the same time. Words of a normal short message sample and a spam short message sample are calculated statistically, weighted values of the words in the normal short message sample and the spam short message sample are calculated respectively, then word segmentation is performed on the content of a to-be-processed short message, a typeweight of the short message is calculated by using a Bayesian algorithm, and the short message can be determined as a spam short message if the typeweight exceeds a preset threshold. Finally, the obtained spam short message can be further mined secondarily, and telephone bills having the same calling number and the same short message content are gathered again to mine a group of numbers sending the spam short message and a group of called numbers, so that an operator can analyze the number groups and perform further operations.

Obviously, it should be understood by those skilled in the art that, the above modules or steps of the disclosure can be implemented a universal computing device. They can be centralized on a single computing device or distributed on a network composed of multiple computing devices. Alternatively, they can be implemented by a program code executable by a computing device. Therefore, they can be stored in a storage device and executed by the computing device, and in same cases, the steps as illustrated or described can be executed according to sequences different from those herein, or they can be implemented by respectively fabricating them into integrated circuit modules, or by fabricating a plurality of modules or steps of them into a single integrated circuit module. Therefore, the disclosure is not limited to any specific combination of hardware and software.

What are described above are only preferred embodiments of the disclosure, but are not for use in limiting the disclosure, and for those skilled in the art, there can be various modifications and changes to the disclosure. Any modification, equivalent replacement, improvement and the like made under the principles of the disclosure should be included in the protection scope defined by the appended claims of the disclosure.

## Industrial Applicability

As described above, a method and device for recognizing spam short messages according to the embodiments of the disclosure have the following beneficial effects: the accuracy in recognizing the spam short messages is improved when there is a massive amount of data in the short messages sent from data sources, and the rate of false report and the rate of missing report for the spam short messages are reduced.

**Claims**

1.  A method for recognizing spam short messages, comprising:

    obtaining, from a spam short message sample set, a first feature word set and a first conditional probability of each feature word in the first feature word set;
    obtaining, from a non-spam short message sample set, a second feature word set and a second conditional probability of each feature word in the second feature word set; and
    recognizing a spam short message set from a short message set to be processed, according to the number of words contained in each short message in the short message set, the number of repetition times of each short message in the short message set, the first feature word set, the second feature word set, the first conditional probability and the second conditional probability.

2.  The method as claimed in claim 1, wherein recognizing the spam short message set from the short message set to be processed comprises:

    calculating a typeweight of each short message according to the following formula:

$$\text{typeweight}= ,\ \frac{P(C0)(\prod_{t=1}^{n} P(Wt|\ C0))^{N}}{P(C1)(\prod_{t=1}^{n} P(Wt|\ C1))^{N}} ,$$

    where P(C0) is a total amount of short message samples in the spam short message sample set, P(C1) is a total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set; and
    recognizing the spam short message set according to a comparison result of the typeweight and a preset threshold, wherein the typeweight of each spam short message in the spam short message set is larger than the preset threshold and the preset threshold is a ratio of P(C0) to P(C1).

3.  The method as claimed in claim 1, wherein obtaining the first feature word set and the first conditional probability comprises:

    preprocessing the spam short message sample set;
    performing word segmentation on each short message sample in the spam short message sample set and obtaining content of each word contained in each short message sample and the number of appearance times of each word;
    statistically calculating the number of appearance times of each word in the spam short message sample set according to the number of appearance times of each word in each short message sample;
    calculating the first conditional probability according to a ratio of the number obtained through the statistical calculation to a total amount of short message samples in the spam short message sample set; and
    calculating a weight of each word in the spam short message sample set by using the number obtained through the statistical calculation and the first conditional probability, sorting all words by weights in a decreasing order, and selecting top N words to form the first feature word set, wherein N is a positive integer.

4.  The method as claimed in claim 1, wherein obtaining the second feature word set in the non-spam short message sample set and the second conditional probability comprises:

    preprocessing the non-spam short message sample set;
    performing word segmentation on each short message sample in the non-spam short message sample set and obtaining content of each word contained in each short message sample, and the number of appearance times of each word;
    statistically calculating the number of appearance times of each word in the non-spam short message sample set according to the number of appearance times of each word in each short message sample;

calculating the second conditional probability according to a ratio of the number obtained through the statistical calculation to a total amount of short message samples in the non-spam short message sample set; and calculating a weight of each word in the non-spam short message sample set by using the number obtained through the statistical calculation and the second conditional probability, sorting all words by weights in a decreasing order, and selecting the top N words to form the second feature word set, wherein N is a positive integer.

5. The method as claimed in claim 1, wherein after recognizing the spam short message set from the short message set to be processed, the method further comprises:

obtaining a calling number sending one or more spam short messages in the spam short message set and a called number receiving one or more spam short messages in the spam short message set; and monitoring the obtained calling number and called number.

6. The method as claimed in any one of claims 1 to 5, wherein the method is applied to a Hadoop platform, and each short message in the short message set is processed in parallel on the Hadoop platform.

7. A device for recognizing spam short messages, comprising:

a first obtaining module, configured to obtain a first feature word set in a spam short message sample set, and a first conditional probability of each feature word in the first feature word set; a second obtaining module, configured to obtain a second feature word set in a non-spam short message sample set and a second conditional probability of each feature word in the second feature word set; and a recognizing module, configured to recognize a spam short message set from a short message set to be processed, according to the number of words contained in each short message in the short message set, the number of repetition times of each short message in the short message set, the first feature word set, the second feature word set, the first conditional probability and the second conditional probability.

8. The device as claimed in claim 7, wherein the recognizing module comprises:

a first calculating unit, configured to calculate a typeweight of each short message according to the following formula:

$$\text{typeweight} = \frac{P(C0)\left(\prod\limits_{t=1}^{n} P(Wt \mid C0)\right)^{N}}{P(C1)\left(\prod\limits_{t=1}^{n} P(Wt \mid C1)\right)^{N}},$$

where P(C0) is a total amount of short message samples in the spam short message sample set, P(C1) is a total amount of short message samples in the non-spam short message sample set, P(Wt | C0) is the first conditional probability, P(Wt | C1) is the second conditional probability, n is the number of words contained in each short message, N is the number of repetition times of each short message in the short message set, and Wt belongs to the first feature word set or the second feature word set; and a recognizing unit, configured to recognize the spam short message set according to a comparison result of the typeweight and a preset threshold, wherein the typeweight of each spam short message in the spam short message set is larger than the preset threshold and the preset threshold is a ratio of P(C0) to P(C1).

9. The device as claimed in claim 7, wherein the first obtaining module comprises:

a first preprocessing unit, configured to preprocess the spam short message sample set; a first word segmentation unit, configured to perform word segmentation on each short message sample in the spam short message sample set and obtain content of each word contained in each short message sample and the number of appearance times of each word; a first statistical unit, configured to statistically calculate the number of appearance times of each word in the spam short message sample set according to the number of appearance times of each word in each short message sample; a second calculating unit, configured to calculate the first conditional probability according to a ratio of the number obtained through the statistical calculation to a total amount of short message samples in the spam short message sample set; and

a first selecting unit, configured to calculate a weight of each word in the spam short message sample set by using the number obtained through the statistical calculation and the first conditional probability, sort all words by weights in a decreasing order, and select top N words to form the first feature word set, wherein N is a positive integer.

10. The device as claimed in claim 7, wherein the second obtaining module comprises:

a second preprocessing unit, configured to preprocess the non-spam short message sample set;

a second word segmentation unit, configured to perform word segmentation on each short message sample in the non-spam short message sample set and obtain content of each word contained in each short message sample, and the number of appearance times of each word;

a second statistical unit, configured to statistically calculate the number of appearance times of each word in the non-spam short message sample set according to the number of appearance times of each word in each short message sample;

a third calculating unit, configured to calculate the second conditional probability according to a ratio of the number obtained through the statistical calculation to a total amount of short message samples in the non-spam short message sample set; and

a second selecting unit, configured to calculate a weight of each word in the non-spam short message sample set by using the number obtained through the statistical calculation and the second conditional probability, sort all words by weights in a decreasing order, and select top N words to form the second feature word set, wherein N is a positive integer.

11. The device as claimed in claim 7, further comprising:

a third obtaining module, configured to obtain a calling number sending one or more spam short messages in the spam short message set and a called number receiving one or more spam short messages in the spam short message set; and

a monitoring module, configured to monitor the obtained calling number and called number.

12. The device as claimed in any one of claims 7 to 11, wherein the device is applied to a Hadoop platform, and each short message in the short message set is processed in parallel on the Hadoop platform.

Obtaining, from a spam short message sample set, a first feature word set and a first conditional probability of each feature word in the first feature word set ⟶ S102

Obtaining, from a non-spam short message sample set, a second feature word set and a second conditional probability of each feature word in the second feature word set ⟶ S104

Recognizing a spam short message set from a short message set to be processed, according to the number of words contained in each short message in the short message set, the number of repetition times of each short message in the short message set, the first feature word set, the second feature word set, the first conditional probability and the second conditional probability ⟶ S106

Fig. 1

First obtaining module 10

Second obtaining module 20

Recognizing module 30

Fig. 2

| First preprocessing unit100 |
| First word segmentation unit102 |
| First statistical unit104 |
| Second calculating unit106 |
| First selecting unit108 |
| First obtaining module10 |

| Second preprocessing unit200 |
| Second word segmentation unit202 |
| Second statistical unit204 |
| Third calculating unit206 |
| Second selecting unit208 |
| Second obtaining module20 |

| First calculating unit300 |
| Recognizing unit302 |
| Recognizing module30 |

| Third obtaining module40 |

| Monitoring module50 |

Fig. 3

<table>
<tr><td colspan="2">**INTERNATIONAL SEARCH REPORT**</td><td>International application No.<br>**PCT/CN2014/080660**</td></tr>
</table>

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

IPC: G06F; H04W; H04Q; H04M; H04L

Documentation searched other than minimum documentation to the extent that such documents are included in the fields searched

Electronic data base consulted during the international search (name of data base and, where practicable, search terms used)

CNPAT, CNKI, WPI, EPODOC: distinguish, advertisement, determine, short message, frequency, selling, SMS, malice, Bayes, spam, rubbish, short, message, filter, detect, recognize, judge, probability

**C. DOCUMENTS CONSIDERED TO BE RELEVANT**

| Category* | Citation of document, with indication, where appropriate, of the relevant passages | Relevant to claim No. |
|---|---|---|
| X | CN 102065387 A (HUAWEI TECHNOLOGIES CO., LTD. et al.), 18 May 2011 (18.05.2011), claims 1-11, description, paragraphs [0025]-[0078], [0095]-[0132], [0161]-[0167], and [0177]-[0181], and figures 1-10 | 1, 5-7, 11, 12 |
| A | CN 101877837 A (HUAWEI TECHNOLOGIES CO., LTD. et al.), 03 November 2010 (03.11.2010), the whole document | 1-12 |
| A | CN 102572744 A (CHINA MOBILE GROUP DESIGN INSTITUTE CO., LTD.), 11 July 2012 (11.07.2012), the whole document | 1-12 |
| A | US 2008141278 A1 (SYBASE 365, INC.), 12 June 2008 (12.06.2008), the whole document | 1-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 August 2014 (29.08.2014) | **24 September 2014 (24.09.2014)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Yujing**<br><br>Telephone No.: (86-10) **82245570** |

Form PCT/ISA/210 (second sheet) (July 2009)

## INTERNATIONAL SEARCH REPORT
### Information on patent family members

International application No.

**PCT/CN2014/080660**

| Patent Documents referred in the Report | Publication Date | Patent Family | Publication Date |
|---|---|---|---|
| CN 102065387 A | 18 May 2011 | None | |
| CN 101877837 A | 03 November 2010 | None | |
| CN 102572744 A | 11 July 2012 | None | |
| US 2008141278 A1 | 12 June 2008 | None | |

Form PCT/ISA/210 (patent family annex) (July 2009)